# EUROPEAN PATENT APPLICATION

(11) **EP 4 759 706 A1**
(43) Date of publication of application: **17.06.2026**
(21) Application number: 24219725.9
(22) Date of filing: 13.12.2024
(51) Int. Cl.: B64C 9/24, B64C 9/02

(54) **KINEMATICS ASSEMBLY FOR A HIGH LIFT BODY, SUPPORT STATION, HIGH LIFT BODY ARRANGEMENT, AS WELL AS WING AND AIRCRAFT COMPRISING SAME**

(71) Applicant: AIRBUS Operations GmbH, 21129 Hamburg (DE)
(72) Inventor: SCHLIPF, Bernhard, 21129 Hamburg (DE); DAANDELS, Dort, 21129 Hamburg (DE); COSKOVIC, Blazenko, 21129 Hamburg (DE)
(74) Representative: LKGLOBAL Partnerschaftsgesellschaft mbB

(57) **Abstract**

A kinematics assembly (10) for a high lift body (8), in particular a droop nose or leading-edge-slat, configured to be mounted to a main body (5) of a wing (3) of an aircraft (1), as well as a corresponding support station (50) for supporting a high lift body (8), a high lift body arrangement (4), a wing (3) and an aircraft (1) are provided, the kinematics assembly (10) comprising an actuation organ (30) providing a drive mounting point (R) configured to mount the Kinematics assembly (10) to a drive organ (20) for moving the high lift body (8) with respect to the main body (5) between a stowed position (S) and a deployed position (T), and a deflection organ (40) configured to be connected to the actuation organ (30) and providing a central hinge point (C) for hinging the high lift body (8) at the main body (5) movably between the stowed position (S) and the deployed position (T); wherein, at least in the stowed position (S), the drive mounting point (R) is located aft of the central hinge point (C) with respect to a travel direction (F) of the aircraft (1).

## Description

### Technical Field

The present disclosure relates to the field of mounting and actuating high lift bodies of leading-edge devices on aircraft wings. In particular, the disclosure relates to a kinematics assembly for a high lift body, in particular a droop nose or leading-edge-slat, configured to be mounted to a main body of a wing of an aircraft, to a support station for supporting a high lift body, in particular a droop nose or leading-edge-slat, at a main body of a wing of an aircraft, to a high lift body arrangement for a wing of an aircraft, to a wing of an aircraft, and to an aircraft.

### Technical Background

High-lift devices are known from the prior art for increasing a lift produced by a wing of an aircraft especially during starting or landing operations, where the aircraft has a speed below its usual cruise speed. The high-lift devices are commonly mechanically movable between a stowed position during normal flight and a deployed position during start or landing. High-lift devices at trailing edges of wings are referred to as flaps, whereas high-lift devices at leading edges of wings are referred to as slats or slots. They can be extended away from the main body of the wing in the deployed position in order to enlarge the wing surfaces and/or alter airflow to enhance the lift provided by the wing.

EP 4 063 257 A1, for example, describes an aircraft wing, including a main wing, a leading-edge high lift assembly including a high lift body, and an assembly connecting the high lift body to the main wing. The high lift body is movable relative to the main wing between stowed and deployed positions. The connection assembly includes at least one rotation element mounted to the high lift body and rotatably mounted to the main wing. The main wing comprises an upper panel with a leading-edge portion and a lower skin panel. The high lift body has a leading and a trailing edge. The high lift body trailing edge moves along the main wing upper skin panel leading edge portion when the high lift body is moved between the stowed and deployed positions. The upper skin panel leading edge portion is elastically deformed when the high lift body is moved from the stowed to the deployed position.

EP 2 726 372 B1 pertains to an airfoil with a main wing, with at least one high-lift body that is arranged on the leading edge of the main wing such that it can be moved between an initial adjusting position and a maximally changed adjusting position referred to the initial adjusting position, with at least one guide mechanism, by means of which the high-lift body is movably coupled to the main wing, and with a driving device for realizing adjusting movements of the high-lift body, wherein the guide mechanism features: - an adjusting lever arrangement with at least one adjusting lever, wherein at least one adjusting lever of the adjusting lever arrangement is coupled to the high-lift body, - at least one first main wing lever that is coupled to the main wing by means of a first main wing pivot joint and to the at least one adjusting lever by means of a first adjusting lever pivot joint such that an effective lever arm is formed between the first adjusting lever pivot joint and the high-lift body, - at least one second main wing lever that is coupled to the main wing by means of a second main wing pivot joint and to the at least one adjusting lever by means of a second adjusting lever pivot joint such that an effective lever arm is formed between the second adjusting lever pivot joint and the first adjusting lever pivot joint, as well as to a method for realizing adjusting movements of a high-lift body relative to a main wing.

US 1 353 666 A describes wings and similar members for aeroplane flying machines constructed with a small formerly located auxiliary wing, separated from the main wing to produce a comparatively narrow through slot extending substantially throughout the wing in a direction transversely of the line of flight, third auxiliary wing having its angle of incidence less than the angle of incidence of said main wing, having its nose located at the approximate level of the nose of the main wing, and having its upper rearward edge at approximately the same distance above the court of the main ring is the highest point of the Kimber offset main ring so as to mask the leading portion of said main wing.

Peter K. C. Rudolph, "High-Lift Systems on Commercial Subsonic Airliners", NASA Contractor Report 4746, CONTRACT A46374D(LAS), September 1996, National Aeronautics and Space Administration, gives an overview of different high-lift systems and their application in aeroplane models. According to the report, wing leading edges evolved from fixed leading edges to a simple Krueger flap, and from fixed, slotted leading edges to two- and three-position slats and variable-camber (VC) Krueger flaps. The complexity of high-lift systems probably peaked on the Boeing 747, which has a VC Krueger flap and triple-slotted, inboard, and outboard trailing-edge flaps. Since then, the tendency in high-lift system development has been to achieve high levels of lift with simpler devices in order to reduce fleet acquisition and maintenance costs.

A typical problem with high-lift devices known from the prior art, in particular for slats, is that in their deployed position there is a slot between the slat and the main wing. Air flowing through that slot from below can replace a boundary layer of the air stream flowing at relatively high speed around the leading edge of the slat. The air can lose a relatively large amount of its kinetic energy due to surface friction drag. Thereby, the overall drag of the wing is increased.

For reducing drag, measures like flexible panels are used according to the prior art, for example, for closing said slot between the slat and the main wing, such as in droop noses providing movable slot-less leading edges increasing the high-lift-performance of a profile. On the one hand, this may be problematic in that the airflow can still be influenced in a way that unwanted suctions arise in an area around the flexible panel. On the other hand, difficulties can arise from the connection of the main wing to the slat and/or flexible panel that their mechanical coupling leads to unwanted tensions and torsions along the wing. Above that, applying mechanics known known from the prior art for deploying slats may not be easily adapted for use with high-aspect ratio wings which are usually shallower and narrower than conventional wings for fixed wing aircraft.

### Summary

It may thus be seen as an object to reduce the drag of deployed high lift bodies. Furthermore, it can be seen as an object, to improve the mechanic behaviour of a wing provided with a high lift body. Moreover, it can be seen as an object to provide high-lift bodies for high-aspect ratio wings. These objects are at least partly achieved by the subject-matter of the independent claims.

According to an aspect, a kinematics assembly for a high lift body, in particular a droop nose or leading-edge-slat, is provided, configured to be mounted to a main body of a wing of an aircraft, comprising an actuation organ providing a drive mounting point (R) configured to mount the kinematics assembly to a drive organ for moving the high lift body with respect to the main body between a stowed position and a deployed position, and a deflection organ configured to be connected to the actuation organ and providing a central hinge point (C) for hinging the high lift body at the main body movably between the stowed position and the deployed position; wherein, at least in the stowed position, the drive mounting point (R) is located aft of the central hinge point (C) with respect to a travel direction (F) of the aircraft.

According to an aspect, a support station for supporting a high lift body, in particular a droop nose or leading-edge-slat, at a main body of a wing of an aircraft, is provided, the support station comprising at least one corresponding kinematics assembly.

According to an aspect, a high lift body arrangement for a wing of an aircraft is provided, comprising at least one corresponding kinematics assembly and/or at least one corresponding support station.

According to an aspect, a wing for an aircraft is provided, comprising at least one corresponding high lift body arrangement.

According to an aspect, an aircraft is provided, comprising at least one wing.

The proposed solution provides an innovative concept for implementing flexible panels and corelated pivotal kinematics. The solution allows for mechanical rotational (around the bending axis) and/or translational (span-wise) decoupling of the high lift body from wing box deflections to avoid restraint stresses. Moreover, and integration of three-dimensional kinematics in contrast to pure two-dimensional principles is enabled. At the same time, the height of the kinematics assembly may be reduced such that it allows for wings with shallow profile sections, which is particularly helpful for high-aspect ratio wings.

Further developments can be derived from the dependent claims and from the following description. Features described with reference to devices and arrangements may be implemented as method steps, or vice versa. Therefore, the description provided in the context of the aircraft and its components apply in an analogous manner also to respective methods. In particular, the functions of the aircraft and of its components may be implemented as method steps of the methods and the method steps may be implemented as functions of the aircraft and its components.

According to an embodiment of a kinematics assembly, the deflection organ further comprises a lower high lift body interface point configured to be connected to the high light body. The lower high lift body interface point may be located inside of the high lift body, i.e., high lift device, and can serve as slat-kinematics-attachment point transferring loads at least two translational degrees of freedom. This further helps in mechanically decoupling the high lift body from the main wing while allowing the implementation of flexible panels are correlated pivotal kinematics.

According to an embodiment of a kinematics assembly, the deflection organ further comprises and/or is connected to an upper high lift body interface point configured to be connected to an upper actuation interface point of the high lift body. The upper high lift body interface point may be located inside of the high lift body, i.e., high lift device, and can be provided as a (spherical) slat-kinematics-attachment-point transferring load in at least one translational degree of freedom, and maybe located above or below of the lower high lift body interface point. This further helps in mechanically decoupling the high lift body from the main wing while allowing the implementation of flexible panels are correlated pivotal kinematics.

According to an embodiment of a kinematics assembly, the deflection organ further comprises an intermediate interface point configured to be connected to an intermediate actuation member providing the upper high lift body interface point. The intermediate actuation member may comprise at least one connecting rod and can act as a link to the upper high lift body interface. Thereby, a respective bearing eliminating all three degrees of freedom may be provided in the region of the upper high lift body interface. This helps to provide a respective deterministic mounting point for the high lift body.

According to an embodiment of a kinematics assembly, the intermediate interface point is located aft of the lower high lift body interface point with respect to the travel direction. Alternatively, or additionally, the intermediate actuation member or a respective link between the upper high lift body interface point and the intermediate interface point may be removed and a central plate member of the deflection organ may be connected directly to the high lift body if tolerances are managed well in the region of the lower high lift by the interface point and/or eccentric elements, such as bushes or bowls are introduced in the region of the upper high lift body interface wind for tolerance compensation. This further helps in mechanically decoupling the high lift body from the main wing while allowing the implementation of flexible panels are correlated pivotal kinematics.

According to an embodiment of a kinematics assembly, the kinematics assembly further comprises a drive unit connected to a drive strut of the actuation organ providing the drive mounting point. The drive unit may comprise a drive lever connected to the drive strut at the drive mounting point. The drive lever may be connected to a drive shaft of the drive unit in a torque transmitting manner. The drive unit may be configured as a gear rotary actuator (GRA). The GRA may comprise a crank shaft and/or drive lever configured to be connected to the actuation organ. Alternatively, or additionally, the drive organ may be configured as a linear drive actuator, for example, comprising a rack and pinion drive, a hydraulic cylinder and piston, or alike. The drive organ, in particular a linear drive actuator, may be supported at a spar of the wing in a drive direction of the drive organ. This further helps in mechanically decoupling the high lift body from the main wing while allowing the implementation of flexible panels are correlated pivotal kinematics. At the same time, the height of the kinematics assembly may be reduced such that it allows for wings with shallow profile sections, which is particularly helpful for high-aspect ratio wings.

According to an embodiment of a kinematics assembly, the deflection organ comprises at least one central plate member providing the drive mounting point and the hinge mounting point. The lower high lift body interface point and/or the intermediate interface point can be formed at the at least one central plate member. The central plate member can be embodied as a respective centre plate or panel provided with bores to be used as the drive mounting point, the hinge mounting point, the high lift body hinge point and/or the intermediate hinge point. This allows for providing the kinematics assembly and a simple, yet reliable and flexibly adaptable manner.

According to an embodiment of a kinematics assembly providing an alternative and/or additional solution, the deflection organ comprises at least one limit stop element for limiting a rotation of the deflection organ. For example, a rotation around an axis of rotation in the region of the central hinge point, any further hinge point and/or interface point may be limited by a respective limit stop arranged at a component of the kinematics assembly such that it engages and/or is engaged by a counterpart provided at a respective neighbouring component.

The limit stop element can be formed as a bar, rib and/or blade arranged at a lateral face of the central plate member, the intermediate actuation member, any connecting and/or connecting member providing rotating around and/or providing an axis of rotation. A counter limit stop element may be provided at a any of the components of the support station for countering the limit stop assembly in that am angle of rotation of at least one of the components of the support station is limited in a predefined manner This further facilitates integration in a shallow profile sections in that a drive mounting point can be located aft of the centre hinge point.

According to an embodiment of a kinematics assembly, the kinematics assembly further comprises at least one panel connecting member configured to link the hight lift body to a flexible panel for at least partially cover the kinematics assembly in the deployed state. The flexible panel can be elastically deformed, when the high lift body is moved from the stowed position to the deployed position. Kinematic interfaces of a panel connecting member, such as a panel-link, may be provided for pulling/coupling the flexible panel in order to synchronously bend the panel with the motion of the high lift body, i.e., device.

A respective kinematic interface point may be attached to a main-hinge-bracket or alternatively, to another bracket on the high lift body. Several, such as at least two, kinematic interface points might be aligned to be supported by one common shaft or bolt. Panel interface points can require a bigger distance between each other than the kinematics interface points, which may lead to a slight angle of the panel-links which is acceptable. One panel link per support-station may be sufficient. This further helps in implementing flexible panels and corelated pivotal kinematics under rotational and/or translational decoupling of the high lift body from wing box deflections to avoid restraint stresses.

According to an embodiment of a kinematics assembly, the deflection organ is configured to be connected to a stabilisation arrangement for taking up lateral forces acting upon the kinematics assembly in a transverse direction. The stabilisation arrangement may comprise a side strut and/or an A-Link. Thereby, a respective support station comprising the kinematics assembly may be configured as a master support station providing a fixed support of the high lift body. This further helps in defining degrees of freedom of the kinematics assembly such that the one hand, in particular forces acting a transverse direction along the wing can be supported, while at the same time a rotational and/or translational decoupling of the high lift body from wing box deflections can be provided to avoid restraint stresses.

According to an embodiment of a kinematics assembly providing an alternative and/or additional solution, the deflection organ comprises a hinge-line and/or provides a floating support for the high lift body allowing for lateral movements of the high lift body with respect to the spar. Thereby, a respective support station comprising the kinematics assembly may be configured as a slave support station providing a floating support of the high lift body. A spanwise floating support with a bracket fixed/bolted to the high lift body with a degree of freedom allowing a rotation of a part of the central hinge point connection around an axis extending essentially perpendicularly to the spanwise orientation, i.e., transverse direction of the wing, may be obtained.

The hinge-line can provide a respective swivel or pivot axis. A moderate distance between the swivel axis and the central hinge point may limit respective swivel-angles and facilitate the utilisation of a spherical bearing in the central hinge point. The hinge-line described axis may be provided by respective hinge member is connected to each other by means of e.g., bolts and bushes, in total a theoretical minimum of two, practically at least three or four, possibly around five hinge members or elements to cover any failure-cases. This further helps in implementing flexible panels and corelated pivotal kinematics under rotational and/or translational decoupling of the high lift body from wing box deflections to avoid restraint stresses.

### Brief Description of the Drawings

The subject matter will hereinafter be described in conjunction with the following drawing figures, wherein like numerals denote like elements, and wherein:
Fig. 1 is a schematic top view of an aircraft with wings provided with high lift body arrangements.
Fig. 2 is a schematic top view of a wing of an aircraft comprising a number of high lift body arrangements.
Fig. 3 is a schematic cross-sectional side view of a mechanical substitution model of a high lift body arrangement of a wing of the aircraft.
Fig. 4 is a schematic perspective view of an embodiment of a support station of the high lift body arrangement comprising a kinematics assembly.
Fig. 5 is a schematic perspective view of a further embodiment of a support station of the high lift body arrangement comprising a kinematics assembly.
Fig. 6 is a schematic perspective view of another embodiment of a support station of the high lift body arrangement comprising a kinematics assembly.
Fig. 7 is a schematic perspective view of an additional embodiment of a support station of the high lift body arrangement comprising a kinematics assembly.
Fig. 8 is a schematic perspective view of a further additional embodiment of a support station of the high lift body arrangement comprising a kinematics assembly.
Fig. 9 is a schematic perspective view of another configuration of an embodiment of a support station of the high lift body arrangement comprising a kinematics assembly.
Fig. 10 is a schematic side view of a deflection organ of any embodiment of a kinematic assembly shown herein provided with a hinge-line.
Fig. 11 is a schematic perspective view of an embodiment of an actuation organ, an intermediate actuation member, and/or panel connecting member of a kinematics assembly provided with limit stop elements.
Fig. 12 is a schematic perspective view of a further embodiment of an actuation organ, an intermediate actuation member, and/or panel connecting member of a kinematics assembly provided with limit stop elements.
Fig. 13 is a schematic perspective exploded view of components of any of the embodiments of a support station shown herein.
Fig. 14 is a schematic perspective view of an embodiment of a support station.
Fig. 15 is a schematic rear view of a panel connecting assembly of the support station shown in Fig. 14.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

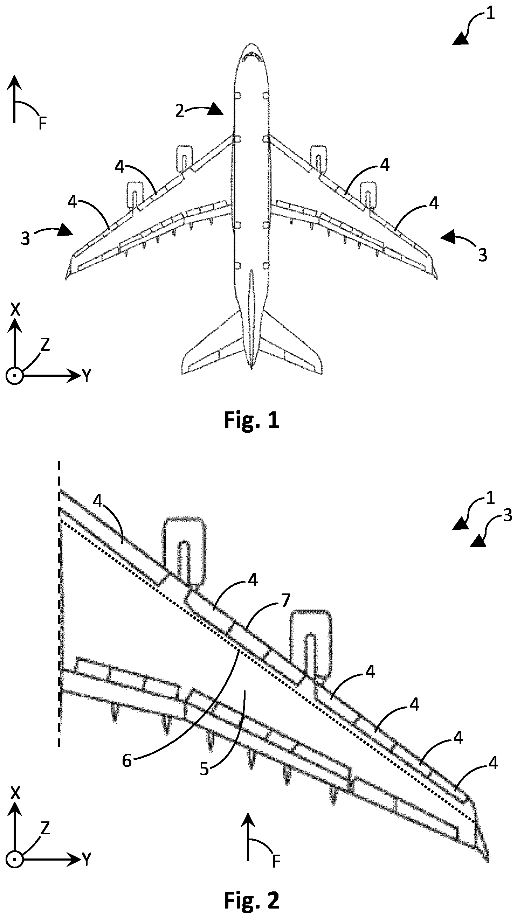

Fig. 1 shows a schematic top view of an aircraft 1 having a fuselage 2 provided with wings 3 having lift body arrangements 4. The aircraft 1 extends in a longitudinal direction X, a transverse direction Y and a height direction Z together constituting a Cartesian coordinate system. The aircraft 1 is configured to travel in a travel direction F running essentially in parallel with the longitudinal direction X, in particular in the air, with the travel direction F is essentially a direction of flight of the aircraft 1.

Fig. 2 shows a schematic top view of one of the wings 3 of the aircraft 1 comprising a number of high lift body arrangements 4 attached to a main body 5 of the wing 3, in particular a spar 6 thereof, for example a front spar. Each of the high lift body arrangements 4 provides a leading edge 7 for the wing 3. In operation, the aircraft 1 travels in the travel direction F, and an air stream (not shown) flows towards the leading edge 7 in a direction opposite to the travel direction F.

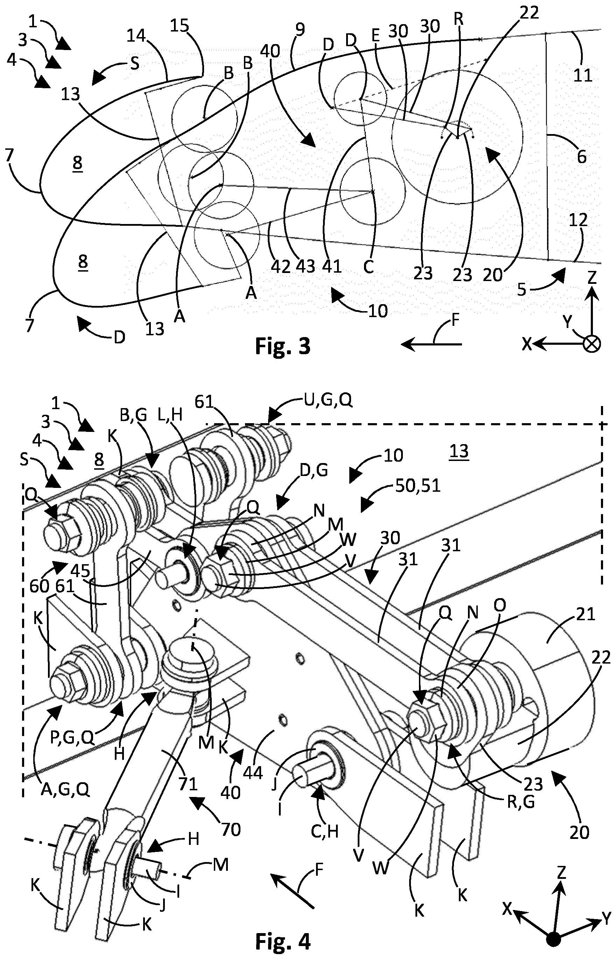

Fig. 3 shows a schematic cross-sectional side view of a mechanical substitution model of the high lift body arrangement 4 of the wing 3 of the aircraft 1 in a projection along the transverse direction Y. The high lift body arrangement 4 comprises a high lift body 8, a flexible panel 9 and a kinematics assembly 10 connecting the high lift body 8 to the spar 6 of the main body 5 of the wing 3 movably between a stowed position S and a deployed position T. The main wing 5 further comprises an upper skin panel 11 and a lower skin panel 12 which are connected to each other by the spar 6.

The high lift body 8 comprises spar 13 via which the high lift body 8 can be mounted to the kinematics assembly 10. An appendix 14 of the high lift body 8 extends away from the spar 13 and forms a trailing edge 15 of the high lift body 8. The flexible panel 9 can connect the high lift body 8, in particular the trailing edge 15 thereof, to the upper skin panel 11 of the main body 5 of the wing 3.

A drive organ 20 of the kinematics assembly 10 comprises a drive unit 11 (see Figs. 4 to 9 and 14), a drive shaft 12, and a drive lever 13. The drive unit 11 may be provided as a step motor, servo motor, or alike. The drive lever 13 can be mounted on the drive shaft 12 such that the drive organ 20 acts as a gear rotary actuator (GRA).

And actuation organ 30 of the kinematics assembly 10 can comprise a drive strut 31. The actuation organ 30, in particular the drive strut 31, connects the drive organ 20 to a deflection organ 40 of the kinematics assembly 10 at a drive mounting point R. The deflection organ 40 can be mounted to the high lift body 8 at an actuation point D and provides a central hinge point C for hinging the high lift body 8 at the main body 5 movably between the stowed position S and the deployed position T.

The deflection organ 40 at least virtually provides a first lever 41, a second lever 42 and a third lever 43 for deflecting the high lift body 8 upon actuation by the drive organ 20 at the drive mounting point R such that the high lift body 8 can be moved between the stowed position S and the deployed position T. When moving the high lift body 8 between the stowed position S and the deployed position T, the actuation point D, which can be arranged at an upper actuation and of the first lever 41 can travel along an actuation line E.

The first lever 41 connects the actuation point D to the central hinge point C. The second lever 42 connects the central hinge point C to a lower high lift body interface point A where the actuation organ 40 is connected to the high lift body 8. The third lever 43 connects the central hinge point C to an upper high lift body interface point B where the actuation organ 40 is connected to the high lift body 8.

The drive mounting point R is located aft of the central hinge point C with respect to the travel direction F. The actuation point D can be located above and slightly in front of the central hinge point C with respect to the travel direction F. The central hinge point C is located aft of the lower high lift body interface point A and upper high lift body interface point B with respect to the travel direction F. The lower high lift body interface point A and upper high lift body interface point B can be arranged essentially above each other in the height direction Z.

Fig. 4 shows a schematic perspective view of an embodiment of a support station 50 of the high lift body arrangement 4 comprising a kinematics assembly 10. The drive organ 20 is connected to the actuation organ 30 at the drive mounting point R. The actuation organ 30 comprises or is embodied as two drive struts 31 connected to the drive level 23 at the drive mounting point R by means of a spherical bearing G allowing for three-dimensional rotations around the respective bearing point, i.e., here, the drive mounting point R.

The spherical bearing G may be embodied as a plain bearing with an inner part N providing an at least partially spherically shaped outer bearing surface and an outer part O providing at least partially spherically shaped inner bearing surface. The inner part N can be provided as a split sleeve inserted into the outer part 0 and held in place by a fastening member Q, for example, embodied as a nut V and a bolt W. In the present example, the outer part P is integrally formed at the respective end section of the drive strut 31.

The deflection organ 40 may connect to the actuation organ 30 via a respective spherical bearings G provided at the actuation point D. At the central hinge point C, a rotational bearing H may be provided, with an inner part I provided in the form of a shaft and an outer part J provided in the form of a bushing. A bracket K can hold the outer part J. In the present example, two brackets K are provided that are attached to the front spar 6 of the main body 5 of the wing 3 (see Fig. 3).

A central plate member 44 can be provided which may constitute a central element of the deflection organ 40. The outer part J of the rotational bearing H can extend through and/or be provided in a respective bore formed in the central plate member 44 incorporating the first lever 41, the second lever 42 and the third lever 43 (see Fig. 3). The central plate member 44 can be provided as two sheet metal parts lying flush against each other.

The drive mounting point D of the deflection organ 40 can be provided at the central plate member 44. The drive mounting point D can be embodied as a spherical bearing G. The two drive struts 31 of the actuation organ 30 may overlap with an upper part of the central plate member 44 in a projection along the transverse direction Y such that they can be attached to the deflection organ 40 by means of a respective fastening member Q extending through the end sections of the drive struts 31 and/or respective bore formed in the central plate member 44.

The lower high lift body interface A can be provided as a spherical bearing G with a fastening member Q in a similar fashion as the drive mounting point R. A respective bore for receiving the fastening member Q may be formed at the central plate member 44 in the region of the lower high lift body interface A. Respective dual brackets K can be provided at the spa 13 of the high lift body 8 for receiving the fastening member Q.

The upper high lift body interface point B can be provided at intermediate actuation members 45 of the deflection organ 40. The intermediate actuation members 45 can be provided in the form of respective struts which can be attached to the spa 13 of the high lift body 8 via respective brackets K, for example, by means of respective spherical bearings G. And intermediate interface point L can be provided to attach the intermediate actuation members 45 to the central plate member 44 of the deflection organ 40.

A panel connecting assembly 60 can be provided, for example, as a part of the kinematics assembly 10 and/or the support station 50 for connecting the high lift body 8 to the flexible panel 9 (see Fig. 3). The panel connecting assembly 60 can comprise respective panel connecting members 61 connecting the high lift body 8 to the flexible panel 9. The panel connecting members 61 can be provided in the form of connecting struts and can link kinematic interface points P mounted to the high lift body 8 to panel interface points U. Both, the kinematic interface points P, and the panel interface points U can be provided as spherical bearings G with respective fastening members Q.

In the present example, the lower high lift body interface point A and the kinematic interface points P may share the same fastening members Q. therefore, to respective sets of brackets K can be affixed to the spa 13 of the high lift body 8. A respective end section of each panel connecting member 31 can be located between a pair of brackets K arranged at each lateral side of the deflection organ 40, in particular, the central plate member 44 thereof. The end sections of the connecting members 31 can be again from such that they provide the outer parts O of the spherical bearings G.

Furthermore, a stabilisation arrangement 70 may be provided as a part of the kinematics assembly 10 and/or the support station 15 for laterally stabilising the kinematics arrangement 10 with respect to the front spar 6 of the main body 5 of the wing 3, thus rendering the support station 50 and master support station 51. The kinematics assembly 70 may comprise a stabilisation member 71 which can be provided in the form of a side-stay strut and/or an A-link. The stabilisation member 71 can be connected to the front spar 6 of the main body 5 via a pair of respective brackets K affixed to the front spar 6 and a rotational bearing H providing a rotational axis M as a middle axis of the rotational bearing H running essentially within a plain extending in parallel to the longitudinal direction X and the transverse direction Y. Another pair of brackets K can be provided at the deflection organ 40, for example, at a side face of the central plate member 44, and connect to the stabilisation member 71 via a rotational bearing H providing a rotational axis M as a middle axis of the rotational bearing H which can essentially extend in parallel to the height direction Z and thus essentially perpendicularly to the rotational axis M of the rotational bearing H connecting the stabilisation member 71 to the brackets K affixed to the front spar 6 of the main body 5 of the wing 3.

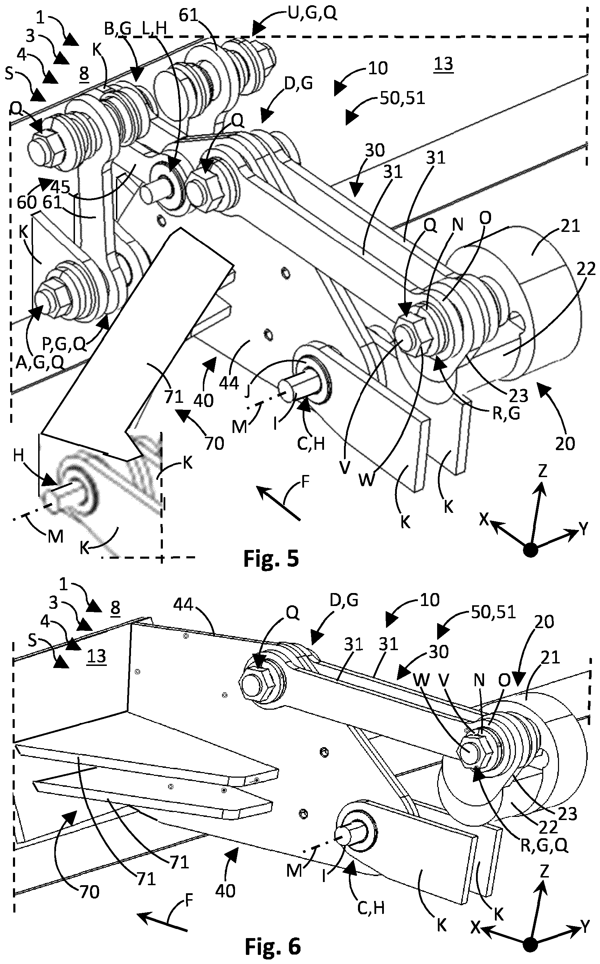

Fig. 5 shows a schematic perspective view of a further embodiment of a support station 50 of the high lift body arrangement 4 comprising a kinematics assembly 10. For the sake of brevity and conciseness, only the differences between the support stations 50 shown in Fig. 5 and 4 will be described in the following. The support station 50 may be provided with a further embodiment of a stabilisation arrangement 70 rendering it a master station 51.

The stabilisation arrangement 70 can comprise a stabilisation member 71 in the form of an A-link comprising a beam connecting to a respective pair of brackets K affixed to the front spar 6 of the main body 5 of the wing 3. The stabilisation member 71 can connect to the brackets K via a rotational bearing H, the rotational axis M of which is aligned with the rotational axis M of the central hinge point C. The other end of the stabilisation member 71 can be rigidly affixed to the actuation organ 30, and particularly by being attached to a side face of the central plate member 44. Consequently, the central plate member 44 and the stabilisation member 71 can synchronously rotate around their common rotational axis M upon actuation of the high lift body arrangement 4.

Fig. 6 shows a schematic perspective view of another embodiment of a support station 50 of the high lift body arrangement 4 comprising a kinematics assembly 10. For the sake of brevity and conciseness, only the differences between the support stations 50 shown in Fig. 6, 5 and 4 will be described in the following. The deflection organ 40 may comprise central plate member 44 which directly connects to the spar 13 of the high lift body 8, thus omitting a connection between the high lift body 8 and the kinematics assembly 10 via the lower high lift body interface point A and the upper high lift body interface point B, as well as the intermediate actuation member 45. In other words, the deflection organ 40 may be rigidly mounted to the spar 13 of the high lift body 8.

The support station 50 may be provided with another embodiment of a stabilisation arrangement 70 rendering it a master station 51. The stabilisation arrangement 70 may comprise at least one, for example, two stabilisation members 71 in the form of brackets laterally connecting the spar 13 of the high lift body 8 to the kinematics assembly 10, in particular to the central plate member 44 of the deflection organ 40. The stabilisation members 71 thereby provide a stiffening structure. Alternatively, or additionally, the central hinge point C may be provided with brackets K laterally supporting the deflection organ 40, in particular the central plate member 44, to be strong enough to sufficiently support span why is loads, i.e., loads acting on the kinematics assembly 10 essentially in parallel to the transverse direction Y.

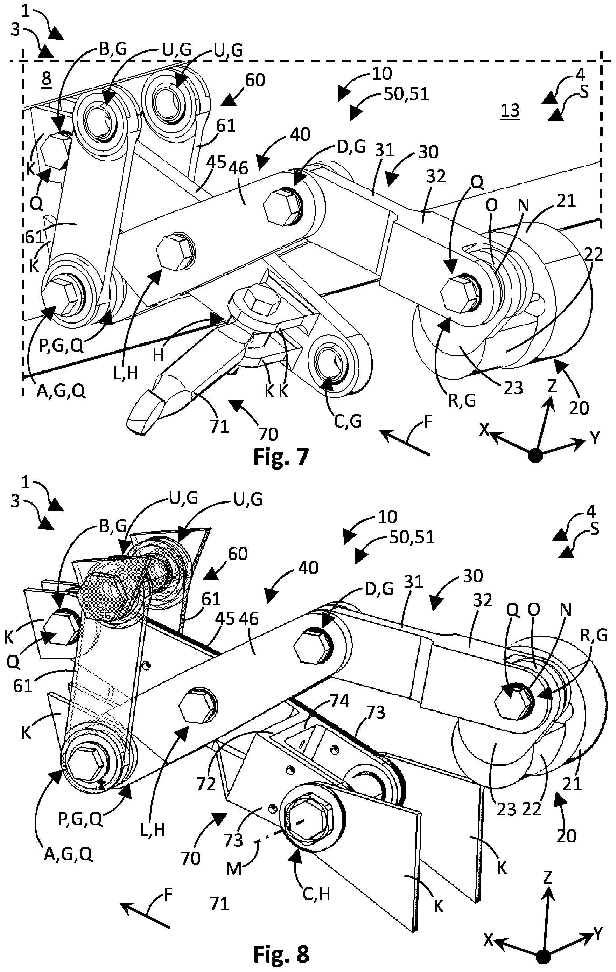

Fig. 7 shows a schematic perspective view of an additional embodiment of a support station 50 of the high lift body arrangement 4 comprising a kinematics assembly 10. For the sake of brevity and conciseness, only the differences between the support stations 50 shown in Fig. 7, 6, 5 and 4 will be described in the following. The actuation organ 30 is embodied as a drive strut 31 with a yoke 32 providing two legs taking up the drive lever 23 between them at the drive mounting point R. The actuation point D is arranged at a and end section of a deflection lever 46 of the deflection organ 40. The deflection lever 46 is configured as a bell crank pivotable around the intermediate interface point L connected to its middle section beyond which the other end section of the deflection lever 46 is connected to the lower high lift body interface point A.

The intermediate actuation member 45 is connected with one end section to the central hinge point C and is connected with its middle section to the deflection lever 46 at the intermediate interface point L beyond which the other end section of the intermediate actuation member 45 is connected to the upper high lift body interface point B. The stabilisation arrangement 70 with the stabilisation member 71 in the form of a strut is connected to the intermediate actuation member 45 between the central hinge point C and the intermediate interface point L, rendering the support station a master station 51.

Fig. 8 shows a schematic perspective view of a further additional embodiment of a support station of the high lift body arrangement comprising a kinematics assembly. For the sake of brevity and conciseness, only the differences between the support stations 50 shown in Fig. 8, 7, 6, 5 and 4 will be described in the following. The stabilisation arrangement 70 is configured such that the end section of the intermediate actuation member 45 that is connected to the central hinge point C is provided with a stabilisation yoke 73 providing two stabilisation legs 73 distanced from each other along the transverse direction Y such that they provide a free space between them.

A stabilisation profile 74, for example, formed as a U-section, can be inserted into the free space between the stabilisation legs 73 in such a way that it abuts the stabilisation yoke 72 and the stabilisation legs 73, thus complimenting them. A back of a yoke of the stabilisation profile 74 may lie flush against the inner face of the stabilisation yoke 72 while the legs of the stabilisation profile 74 may lie flush against in the side faces of the stabilisation legs 73. For enforcing the intermediate actuation of 45 by means of the stabilisation profile 74, lateral loads acting upon the kinematics assembly can along the transverse direction Y can be supported at the intermediate actuation member 45 via the central hinge point C. The brackets K laterally encompassing the stabilisation yoke 72 and attached to the front spar 6 (see Fig. 3) can take of respective lateral loads, thus rendering the support station 50 a master support section 51.

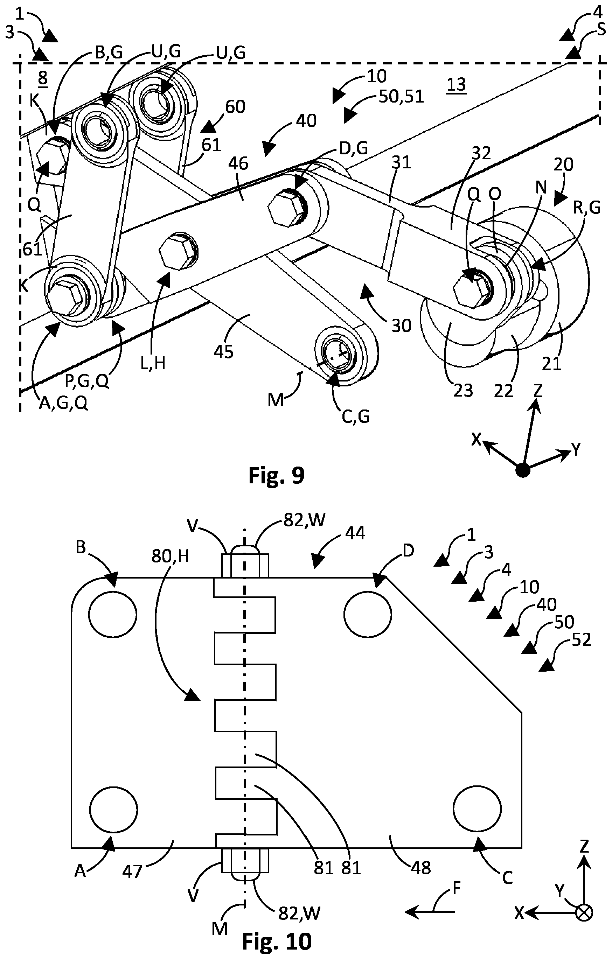

Fig. 9 shows a schematic perspective view of another configuration of an embodiment of a support station 50 of the high lift body arrangement 4 comprising a kinematics assembly 10. For the sake of brevity and conciseness, only the differences between the support stations 50 shown in Fig. 9, 8, 7, 6, 5 and 4 will be described in the following. As the stabilisation arrangement 70 is omitted in the embodiment of the support section 50 shown in Fig. 9, the support station 50 acts as a slave station 52 providing a floating support of the high lift body 8 with respect to the front spar 6 of the main body 5 of the wing 3 in order to allow relative movements between the high lift body 8 and the front spar 6 essentially in parallel to the transverse direction Y.

Fig. 10 shows a schematic side view of a deflection organ 40 of any embodiment of a kinematic assembly 10 shown herein provided with a hinge-line 80 which may be provided at the central plate member 44 the hinge line 80 can run essentially divide the central plate member 44 into a front section 47 and an aft section 48. The front section 47 of the aft section 48 can be configured pivotable around the middle axis M, i.e., pivot axis, defined by the hinge line 80, thus rendering respective support station 50 is less support station 52 providing a floating support of the high lift body 8 with respect to the front spar 6 of the main body 5 of the wing 3 in order to allow relative movements between the high lift body 8 and the front spar 6 occurring essentially in parallel to the transverse direction Y.

The lower high lift body interface point A and the upper high lift body interface point B can be provided at the front section 47 in front of the hinge line 80 with respect to the travel direction F. The central hinge point D and the actuation point D can be provided at the aft section 48 behind of the hinge line 80 with respect to the travel direction F. The hinge line 80 can be formed of hinge elements 81 provided at the front section 47 and the aft section 48 such that they engage each other along the hinge line 80 overlapping each other along the height direction Z such that they have a meandering shape in a projection along the transverse direction Y. A shaft 82 extending essentially in parallel to the height direction Z may extend through the hinge elements 81 and may be affixed at its end section acting as bolt W by respective fasting member Q, for example, a nut V, rendering the hinge line 81 a rotational bearing H.

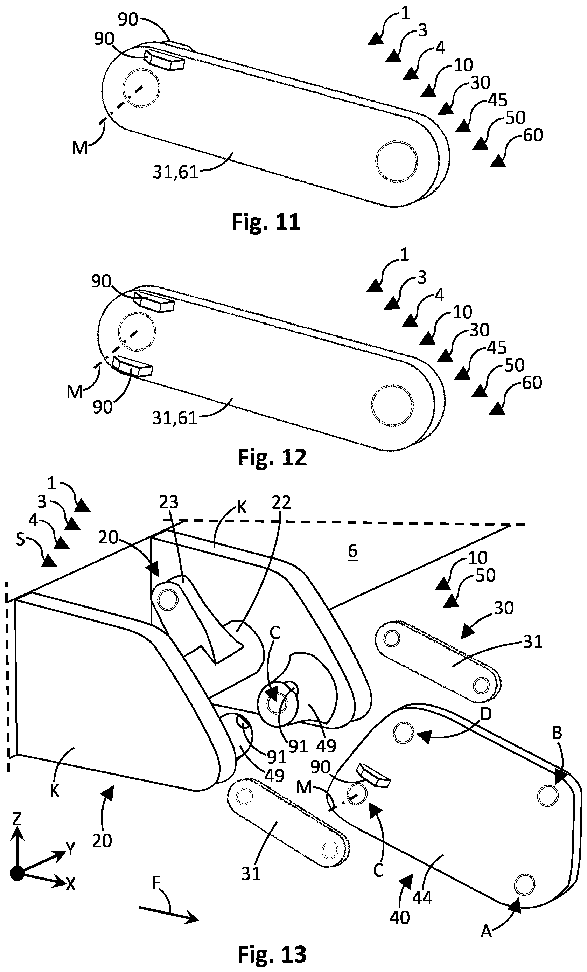

Fig. 11 shows a schematic perspective view of an embodiment an actuation organ 30, an intermediate actuation member 45, and/or panel connecting member 60 of any of the embodiments of a kinematics assembly 10 shown herein provided with limit stop elements 90 which may be formed as bars, ribs, or alike. For example, the limit stop elements 90 can extend laterally away from a respective component, i.e., protrude from side faces of a drive strut 31 of the actuation organ 30, and intermediate actuation member 45, and/or a panel connecting member 61 of the panel connecting assembly 60, respectively. By protruding from respective side faces, the opposing limit stop elements 90 may engage respective counterpart of the kinematics assembly 10, for example, in order to limit a rotation of the deflection organ 40 around the central hinge point C or any other part of the kinematics assembly 10 around a respective rotation axis M extending through the respective member arranged adjacent to the limit stop elements 90.

Fig. 12 shows a schematic perspective view of a further embodiment of an actuation organ 30, an intermediate actuation member 45, and/or panel connecting member 60 of any of the embodiments of a kinematics assembly 10 shown herein provided with limit stop elements 90 which may be formed as bars, ribs, or alike. For example, the limit stop elements 90 can be arranged at two opposing sides of a bore of a respective component, such that they extend laterally away from one side face of a drive strut 31 of the actuation organ 30, and intermediate actuation member 45, and/or a panel connecting member 61 of the panel connecting assembly 60, respectively. By protruding from the respective side face, the opposing limit stop elements 90 may engage respective counterpart of the kinematics assembly 10, for example, in order to limit a rotation of the deflection organ 40 around the central hinge point C or any other part of the kinematics assembly 10 around a respective rotation axis M extending through the respective bore.

Fig. 13 shows a schematic perspective exploded view of components of any of the embodiments of a support station 50 shown herein. In the present example, the support station 50 comprises a deflection organ 40 provided with at least one limit stop element 90 for limiting a rotation of the kinematics assembly 10 around the central hinge point C. The at least one limit stop element 90 can be formed at a lateral side face of the central plate member 44 in the region of the respective bore serving as a part of the central hinge point C, for example, in that the limit stop element 90 is arranged above the bore in the vicinity thereof.

Counter stop elements 91 can be provided at respective brackets K, or in the present example, hinge bases 49 configured for holding a respective, bolt, shaft or axle defining the rotational axis M of the central hinge point C. The hinge bases 49 may protrude laterally away towards each other from respective brackets K attached to the front spar 6 of the main body 5 of the wing 3. The counter limit stop elements 91 can be formed as protrusions and/or flat portions at the respective brackets K and/or hinge bases 49 adapted for engaging the limit stop element 90 in a predefined rotational position of the deflection organ 40, in particular the central plate member 44, with respect to the front spar 6.

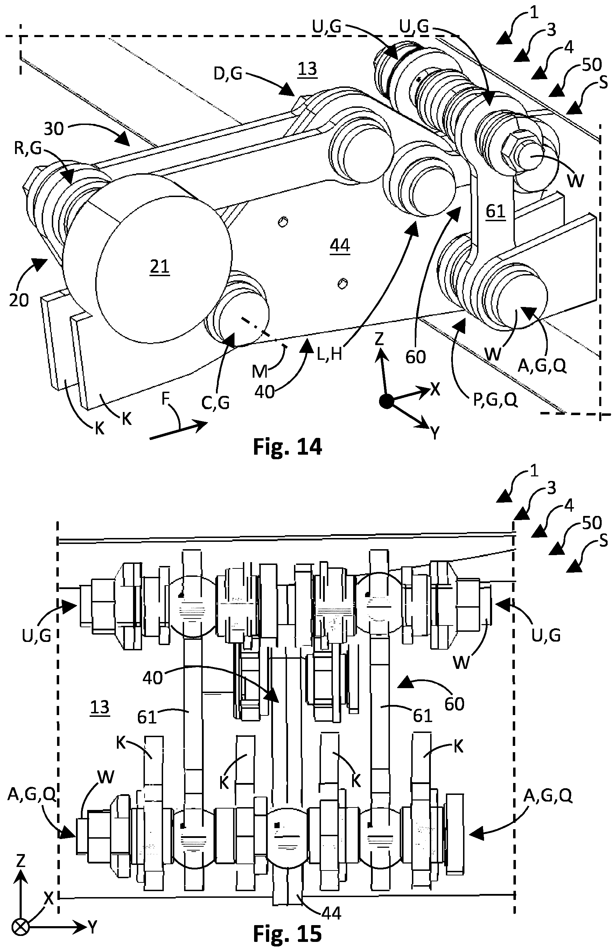

Fig. 14 shows a schematic perspective view of an embodiment of the support station 50. The support station 50 may be configured as a massive support station 51 or a slave support station 52. The kinematics interface point P and/or the panel interface point U of the panel connecting assembly 60 may be configured such that a common bolt W is used. Such a common bolt W can extend through the entire bearings, in particular spherical bearings G provided for the kinematics interface point P and/or the panel interface point U. In other words, the common bolt W may extend along the transverse direction Y through the entire panel connecting assembly 60, in particular the respective panel connecting members 61.

Fig. 15 shows a schematic rear view of a panel connecting assembly 60 of the support station 50 shown in Fig. 14. Here it becomes apparent that a common bolt W provided for the panel interface point and/or points U may have to span a bigger distance measured essentially along the transverse direction Y than a common bolt W provided for the kinematics interface point P and/or points. Consequently, the panel connecting members 61 may be slightly angled in that they are inclined in a direction towards the centrally arranged deflection organ 40 along their extension from the respective panel interface point U to the kinematics interface point P. One panel connecting member 61 per support station 50 may be sufficient.

### List of Reference Signs

- 1: apparatus / aircraft
- 2: fuselage
- 3: wing
- 4: high lift body arrangement / high lift body device
- 5: main body
- 6: spar / front spar (main body)
- 7: leading-edge
- 8: high lift body
- 9: flexible panel
- 10: kinetics assembly
- 11: upper skin panel
- 12: lower skin panel
- 13: spar (high lift body)
- 14: appendix
- 15: trailing edge

- 20: drive organ
- 21: drive unit / motor
- 22: drive shaft
- 23: drive lever

- 30: actuation organ
- 31: drive strut
- 32: yoke

- 40: deflection organ
- 41: first lever
- 42: second lever
- 43: third lever
- 44: central plate member
- 45: intermediate actuation member
- 46: deflection lever
- 47: front section
- 48: aft section
- 49: hinge base

- 50: support station
- 51: master station
- 52: slave station

- 60: panel connecting assembly
- 61: panel connecting member

- 70: stabilisation arrangement
- 71: stabilisation member
- 72: stabilisation yoke
- 73: stabilisation legs
- 74: stabilisation profile

- 80: hinge line
- 81: hinge element
- 82: shaft
- 90: limit stop element
- 91: counter limit stop element

- A: lower high lift body interface point
- B: upper high lift body interface point
- C: central hinge point
- D: actuation point
- E: actuation line
- F: travel direction / direction of flight
- G: spherical bearing
- H: rotational bearing
- I: inner part / shaft
- J: outer part / bushing
- K: bracket
- L: intermediate interface point
- M: rotational axis / middle axis
- N: inner part / sleeve
- O: outer part / end section
- P: kinematics interface point
- Q: fastening member
- R: drive mounting point
- S: stowed position
- T: deployed position
- U: panel interface point
- V: nut
- W: bolt
- X: longitudinal direction
- Y: transverse direction
- Z: height direction

## Claims

1. Kinematics assembly (10) for a high lift body (8), in particular a droop nose or leading-edge-slat, configured to be mounted to a main body (5) of a wing (3) of an aircraft (1), comprising
an actuation organ (30) providing a drive mounting point (R) configured to mount the Kinematics assembly (10) to a drive organ (20) for moving the high lift body (8) with respect to the main body (5) between a stowed position (S) and a deployed position (T), and
a deflection organ (40) configured to be connected to the actuation organ (30) and providing a central hinge point (C) for hinging the high lift body (8) at the main body (5) movably between the stowed position (S) and the deployed position (T);
wherein, at least in the stowed position (S), the drive mounting point (R) is located aft of the central hinge point (C) with respect to a travel direction (F) of the aircraft (1).

2. Kinematics assembly (10) according to claim 1, wherein the deflection organ (40) further comprises a lower high lift body interface point (A) configured to be connected to the high lift body (8).

3. Kinematics assembly (10) according to claim 1 or 2, wherein the deflection organ (40) further comprises and/or is connected to an upper high lift body interface point (B) configured to be connected to an upper actuation interface point (B) of the high lift body (8).

4. Kinematics assembly (10) according to claim 3, wherein the deflection organ (40) further comprises an intermediate interface point (L) configured to be connected to an intermediate actuation member (45) providing the upper high lift body interface point (B).

5. Kinematics assembly (10) according to claims 2 and 4, wherein the intermediate interface point (L) is located aft of the lower high lift body interface point (A) with respect to the travel direction (F).

6. Kinematics assembly (10) according to at least one of claims 1 to 5, further comprising a drive unit (20) connected to a drive strut (31) of the actuation organ (30) providing the drive mounting point (R).

7. Kinematics assembly (10) according to at least one of claims 1 to 6, wherein the deflection organ (40) comprises at least one central plate member (44) providing the drive mounting point (R) and the central hinge mounting point (C).

8. Kinematics assembly (10) according to at least one of claims 1 to 7, wherein the deflection organ (40) comprises at least one limit stop element (90) for limiting a rotation of the deflection organ (40).

9. Kinematics assembly (10) according to at least one of claims 1 to 8, further comprising at least one panel connecting member (61) configured to link the hight lift body (8) to a flexible panel (9) for at least partially cover the Kinematics assembly (10) in the deployed state (T).

10. Kinematics assembly (10) according to at least one of claims 1 to 9, wherein the deflection organ (40) is configured to be connected to a stabilisation arrangement (70) for taking up lateral forces acting upon the Kinematics assembly (10) in a transverse direction (Y).

11. Kinematics assembly (10) according to at least one of claims 1 to 10, wherein the deflection organ (40) comprises a hinge-line (80) and/or provides a floating support for the high lift body (8) allowing for lateral movements of the high lift body with respect to the spar (6).

12. Support station (50) for supporting a high lift body (8), in particular a droop nose or leading-edge-slat, at a main body (5) of a wing (3) of an aircraft (1), the support station (50) comprising at least one Kinematics assembly (10) according to at least one of claims 1 to 11.

13. High lift body arrangement (4) for a wing (3) of an aircraft (1), comprising at least one kinematics assembly (10) according to at least one of claims 1 to 11 and/or at least one support station (50) according to claim 12.

14. Wing (3) for an aircraft (1), comprising at least one high lift body arrangement (4) according to claim 13.

15. Aircraft (1) comprising at least one wing (3) according to claim 14.

## Amended claims

### Amended claims in accordance with Rule 137(2) EPC.

1. Kinematics assembly (10) for a high lift body (8), in particular a droop nose or leading-edge-slat, configured to be mounted to a main body (5) of a wing (3) of an aircraft (1), comprising
an actuation organ (30) providing a drive mounting point (R) configured to mount the kinematics assembly (10) to a drive organ (20) for moving the high lift body (8) with respect to the main body (5) between a stowed position (S) and a deployed position (T), and
a deflection organ (40) configured to be connected to the actuation organ (30) at an actuation point (D) and providing a central hinge point (C) for hinging the high lift body (8) at the main body (5) movably between the stowed position (S) and the deployed position (T);
wherein, at least in the stowed position (S), the drive mounting point (R) is located aft of the central hinge point (C) and the actuation point (D) is located above and in front of the central hinge point (C) with respect to a travel direction (F) of the aircraft (1).

2. Kinematics assembly (10) according to claim 1, wherein the deflection organ (40) further comprises a lower high lift body interface point (A) configured to be connected to the high lift body (8).

3. Kinematics assembly (10) according to claim 1 or 2, wherein the deflection organ (40) further comprises and/or is connected to an upper high lift body interface point (B) configured to be connected to an upper actuation interface point (B) of the high lift body (8).

4. Kinematics assembly (10) according to claim 3, wherein the deflection organ (40) further comprises an intermediate interface point (L) configured to be connected to an intermediate actuation member (45) providing the upper high lift body interface point (B).

5. Kinematics assembly (10) according to claims 2 and 4, wherein the intermediate interface point (L) is located aft of the lower high lift body interface point (A) with respect to the travel direction (F).

6. Kinematics assembly (10) according to at least one of claims 1 to 5, further comprising a drive unit (20) connected to a drive strut (31) of the actuation organ (30) providing the drive mounting point (R).

7. Kinematics assembly (10) according to at least one of claims 1 to 6, wherein the deflection organ (40) comprises at least one central plate member (44) providing the actuation point (D) and the central hinge mounting point (C).

8. Kinematics assembly (10) according to at least one of claims 1 to 7, wherein the deflection organ (40) comprises at least one limit stop element (90) for limiting a rotation of the deflection organ (40).

9. Kinematics assembly (10) according to at least one of claims 1 to 8, further comprising at least one panel connecting member (61) configured to link the hight lift body (8) to a flexible panel (9) for at least partially cover the Kinematics assembly (10) in the deployed state (T).

10. Kinematics assembly (10) according to at least one of claims 1 to 9, wherein the deflection organ (40) is configured to be connected to a stabilisation arrangement (70) for taking up lateral forces acting upon the Kinematics assembly (10) in a transverse direction (Y).

11. Kinematics assembly (10) according to at least one of claims 1 to 10, wherein the deflection organ (40) comprises a hinge-line (80) and/or provides a floating support for the high lift body (8) allowing for lateral movements of the high lift body with respect to the spar (6).

12. Support station (50) for supporting a high lift body (8), in particular a droop nose or leading-edge-slat, at a main body (5) of a wing (3) of an aircraft (1), the support station (50) comprising at least one Kinematics assembly (10) according to at least one of claims 1 to 11.

13. High lift body arrangement (4) for a wing (3) of an aircraft (1), comprising at least one kinematics assembly (10) according to at least one of claims 1 to 11 and/or at least one support station (50) according to claim 12.

14. Wing (3) for an aircraft (1), comprising at least one high lift body arrangement (4) according to claim 13.

15. Aircraft (1) comprising at least one wing (3) according to claim 14.
